(19) **Europäisches Patentamt / European Patent Office / Office européen des brevets**

(11) **EP 1 959 591 B1**

(12) **EUROPEAN PATENT SPECIFICATION**

(45) Date of publication and mention
of the grant of the patent:
**27.06.2018 Bulletin 2018/26**

(51) Int Cl.:
**H04B 1/711** *(2011.01)*  **H04W 24/08** *(2009.01)*
**H04B 17/23** *(2015.01)*  **H04B 17/327** *(2015.01)*
**H04W 72/08** *(2009.01)*

(21) Application number: **05814579.8**

(22) Date of filing: **28.11.2005**

(86) International application number:
**PCT/CN2005/002026**

(87) International publication number:
**WO 2007/059655 (31.05.2007 Gazette 2007/22)**

(54) **METHOD AND DEVICE FOR MONITORING RECEIVING RADIO-FREQUENCY CHANNEL IN WIRELESS COMMUNICATION SYSTEM**

VERFAHREN UND EINRICHTUNG ZUR ÜBERWACHUNG EINES EMPFANGS-HOCHFREQUENZKANALS IN EINEM DRAHTLOSEN KOMMUNIKATIONSSYSTEM

METHODE ET DISPOSITIF POUR SURVEILLER UN CANAL DE RECEPTION DE RADIOFREQUENCE DANS UN SYSTEME DE COMMUNICATION SANS FIL

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**20.08.2008 Bulletin 2008/34**

(73) Proprietor: **ZTE Corporation**
**Shenzhen, Guangdong 518057 (CN)**

(72) Inventors:
• **DING, Jiewei**
  **Guangdong province 518057 (CN)**
• **ZHANG, Haiqing**
  **Guangdong Province 518057 (CN)**
• **LEI, Yu**
  **Guangdong Province 518057 (CN)**

(74) Representative: **Novagraaf Technologies**
**Bâtiment O2**
**2, rue Sarah Bernhardt**
**CS90017**
**92665 Asnières-sur-Seine Cedex (FR)**

(56) References cited:
**EP-A1- 1 492 249  EP-A1- 1 496 628**
**CN-A- 1 411 191  CN-A- 1 462 523**
**CN-A- 1 512 692  US-A1- 2004 127 261**

## Description

### Field of the Invention:

The present invention relates to the wireless communication field, especially to a method for monitoring receive radio frequency channel invalidation in code division multiple access (CDMA) wireless communication system.

### Description of the related art

Base station in wireless communication is a system for transmitting and receiving wireless signals. In order to perform the basic receive function, multi antenna diversity reception is the most popular and basic configuration in the base station system. As to the digital signal process in the base station, the assembly of all the devices and parts passed through by the signals received by an antenna during the process of changing from radio frequency signal to base band digital signal can be named as receive radio frequency channel, which includes radio frequency path such as receiving antenna, radio frequency cable, duplexer and signal transceiver. Accordingly, the assembly of all the devices and parts passed through by transmitting signal during the process of changing from base band digital signal to radio frequency signal transmitted by an antenna was called transmitting radio frequency channel.

The normal operation of each receive radio frequency channel is the precondition for the whole communication system to work properly. If one of the receive radio frequency channels fails to work, and there is no way of monitoring and warning, then, the system can still operate by other receive radio frequency channel at this time, but the performance and capability of the system will be deteriorated severely. For instance, in the double-antenna diversity reception system, if one receive radio frequency channel fails to work completely, the performance of the system will be decreased by approximately 3dB and the capability will be decreased to half of the original, besides, the cell coverage radius will be reduced and the system will be in a semi-paralytic state.

For example, during the process of system test and base station project installation, probably due to the fact that the test operator and the installation worker are negligent, not all the radio frequency cable interface are screwed up, at this time, the system can still conduct a variety of business communication, nevertheless, without the monitoring function of the receive radio frequency channel, it is difficult to observe the loss in performance and capability of the system. In the same way, if some receive radio frequency channel including the antenna goes wrong in the operating process of the system, these abnormity are difficult to be known without the monitoring and warning function of the receive radio frequency channel.

Therefore, in the wireless communication system, monitoring and maintaining the operation state of each constituent of the wireless communication system is a very important function.

Whether transmitting antenna is normal or not can be effectively monitored through Standing Wave Ratio index to some extent, which, however, cannot replace the malfunction monitoring of the receive radio frequency channel. On the one hand, transmitting function is possibly normal but the receiving is not; on the other hand, it is likely that transmitting doesn't adopt transmit diversity (i.e. using only one antenna) while receiving adopt multiple antenna.

In view of the possibility of the above problem and its influence, monitoring and warning function is necessary for receive radio frequency channel in base station system.

The document EP1492249 discloses a downlink power control method for multicast service in mobile radio networks.

The document EP1496628 relates to a method of estimating a communication path quality in a mobile communication system.

The document US 2004/0127261 discloses a method and monitoring means for monitoring the performance of an antenna device.

Japanese patent JP 04354434A discloses a method for testing receiving signal channel by generating a specialized test signal. The realization of this method is very complicated and the regularly operation of the system would be interfered as well.

American patent US6266528 discloses a monitoring method for counting average antenna quality for a long time by using Received Signal Strength Indicator (RSSI). When there is a mobile station communicating through the antenna of the present base station, accumulating the RSSI until it reaches a certain quantity, contrasting the result of each antenna, the antenna with an evidently smaller accumulated value usually have malfunction.

Chinese patent CN200310112958 "the method and device for monitoring antenna equipment performance", based on the above American patent, discloses a method for monitoring antenna quality by setting different threshold comparative mechanism. The performance sample referenced in this patent merely mentioned RSSI.

However, RSSI is insensitive to the intensity of the signals received by mobile station. Although the quality of the receive radio frequency channel will have an effect on the values and changes of RSSI, the effect is tiny. Under the circumstance that there is no mobile station in communication, the difference for RSSI of connecting antenna or not is only 0.5 - 2dB. Even if it is a normal receive radio frequency channel, its RSSI value would has a fluctuating error of several dB. In addition, the RSSI value of a normal receive radio frequency channel will vary according to the changes of communication traffic. In principle, the error can be judged from the changes of RSSI, but, in the operating process of the system, the extent of change in RSSI is not obvious. RSSI will increase 3dB when the number of the communication user reaches half of the system capacity (generally the system capacity is one hundred users per cell.) and the system load is not so big in the most time. Little change will occur to RSSI when there are only several users are in communication, Hence it is rather difficult to evaluate the quality of receive radio frequency channel by RSSI.

Moreover, the above mentioned monitoring method merely monitors part of the whole receive radio frequency channel. Sometimes, in the base station, there is a poor contact or loose insertion between veneers, or there is an failure in the link from radio frequency to base band as RRU is being adopted (on demand of network coverage, there exists a discrepancy of dozens of meters or kilometers in physical positions between radio frequency unit and base band processing unit), even if RSSI is normal, there is still some problem with the signal of base band digital signal processing.

In view of the above disadvantages, the present invention aims to provide a method for monitoring receive radio frequency channel in wireless communication system and the device thereof.

## Summary of the Invention

The present invention aims to provide a method for monitoring receive radio frequency channel in wireless communication system and the device thereof, which is used for monitoring the quality of the receive radio frequency channel in an easy, fast and effective manner.

In order to realize the above object, the present invention provides a method for monitoring receive radio frequency channel in wireless communication system, which is applicable to wireless communication system comprising a data exchange module, a multi-path search module connected to the data exchange module, a data demodulation module connected to the data exchange module and the multi-path search module, and a operation and maintenance subsystem, wherein the following steps are comprised:

Step one, when users are in communication, according to the multi-path search results of each receive radio frequency channel processed by the multi-path search module or the data demodulation results of each receive radio frequency channel processed by the data demodulation module, updating the quality monitoring value of the each receive radio frequency channel periodically;

Step two, comparing and analyzing the quality monitoring value of the each receive radio frequency channel and obtaining the analysis results; Step three, alarm notifying the analysis results to the operation and maintenance subsystem.

The method for monitoring receive radio frequency channel in wireless communication system, wherein, in Step one, the multi-path search results or the data demodulation results are signal information exclusive of other interference and noises.

The method for monitoring receive radio frequency channel in wireless communication system, wherein, in Code Division Multiple Access wireless communication system, the multi-path search results or the data demodulation results are signal information after being descrambled and despreaded.

The method for monitoring receive radio frequency channel in wireless communication system, wherein, in Step one, the multi-path search results can be any one of the following numerical values:

The energy of the strongest path of the multi-path search results of each receive radio frequency channel;
The sum of the energy of all the paths of the multi-path search results of each receive radio frequency channel;
The ratio of the energy of the strongest path of the multi-path search results of each receive radio frequency channel to the noise energy; and
The ratio of the sum of energy of all the paths of the multi-path search results of each receive radio frequency channel to the noise energy.

The method for monitoring receive radio frequency channel in wireless communication system, wherein, in Step one, the data demodulation results can be any one of the following numerical values:

The demodulation energy of the strongest path of the data demodulation results of each receive radio frequency channel;
The total demodulation energy of the data demodulation results of each receive radio frequency channel;
The ratio of the demodulation energy of the strongest path of the data demodulation results of each receive radio frequency channel to the noise energy; and
The ratio of the sum of the total demodulation energy of the data demodulation results of each receive radio frequency channel to the noise energy.

The method for monitoring receive radio frequency channel in wireless communication system, wherein, in Step one, in updating the quality monitoring value of each receive radio frequency channel periodically, the update period adopted is dozens of milliseconds, several seconds or dozens of seconds.

The method for monitoring receive radio frequency channel in wireless communication system, wherein, in Step one, the update of the quality monitoring value of each receive radio frequency channel is implemented in IIR filtering mode, specified as follows: performing IIR filtering on history quality monitoring value of each receive radio frequency channel and the current multi-path search results or the data demodulation results of the receive radio frequency channel, to obtain updated quality monitoring value; or, the update of the quality monitoring values of each receive radio frequency channel is implemented in FIR filtering mode, specified as follows: weighing and averaging the multi-path search results or data demodulation results of each receive radio frequency channel by FIR filtering method, and then obtain the updated quality monitoring value.

The method for monitoring receive radio frequency channel in wireless communication system, wherein, in Step two, comparing and analyzing the quality monitoring value of each receive radio frequency channel is implemented by the following mode: calculating the ratio of the quality monitoring value of each receive radio frequency channel to the mean value of the quality monitoring values of all receive radio frequency channels, if the ratio is less than a set threshold, the receive radio frequency channel the ratio corresponded to is regarded as problematic.

The method for monitoring receive radio frequency channel in wireless communication system, wherein, in Step two, comparing and analyzing the quality monitoring value of each receive radio frequency channel is implemented by the following mode: calculating the ratio of the quality monitoring value of each receive radio frequency channel to the mean value of the quality monitoring values of other receive radio frequency channels, if the ratio is less than a set threshold, the receive radio frequency channel the ratio corresponded to is regarded as problematic.

The method for monitoring receive radio frequency channel in wireless communication system, wherein, in Step two, comparing and analyzing the quality monitoring value of each receive radio frequency channel is implemented by the following mode: comparing the quality monitoring value of each receive radio frequency channel to a threshold set as the system designed directly, if the quality monitoring value of the receive radio frequency channel is less than the threshold value, the receive radio frequency channel is regarded as problematic.

The method for monitoring receive radio frequency channel in wireless communication system, wherein, in Step three, the process of alarm notifying the operation and maintenance subsystem further comprises:

When some receive radio frequency channel is regarded as problematic, perform alarm notification;
When some receive radio frequency which was originally regarded as problematic comes to work normally currently, perform alarm cancel notification;
Or whatever quality monitoring result it would be, notify the up-to-date quality monitoring results periodically.

In order to realize the above object, the present invention further provides a device for monitoring receive radio frequency channel in wireless communication system, comprises a data exchange module, a multi-path search module connected to the data exchange module, a data demodulation module connected to the data exchange module and the multi-path search module, and a operation and maintenance subsystem, characterized in further comprises: a radio frequency channel monitor module connected to the multi-path search module or the data demodulation module; according to periodically updated quality monitoring value of each receive radio frequency channel obtained from the multi-path search results of each receive radio frequency channel processed by the multi-path search module or the data demodulation results of each receive radio frequency channel processed by the data demodulation module, the radio frequency channel monitoring module analyzing the quality of each receive radio frequency channel, and alarm notifying the analysis results to the operation and maintenance subsystem.

The present invention conducts quality monitoring of receive radio frequency channel by simply utilizing data demodulation results or multi-path search results, and has the advantages of high monitor accuracy and short statistic time. By adopting the present invention, even if only one user is in communication, the difference of receive radio frequency channels can be well judged, and the preset invention can be widely used. Moreover, as the quality monitoring is conducted from base band multi-path search or demodulation energy, the present invention can monitor the quality situation of the whole channel from antennae to base band process including data exchange module.

**Brief Description of the Drawings**

Figure 1 is a structure illustration diagram of the common wireless communication system;

Figure 2 is a system block diagram of conducting receive radio frequency channel monitoring by adopting multi-path search of the method of the present invention;

Figure 3 is a system block diagram of conducting receive radio frequency channel monitoring by adopting data demodulation of the method of the present invention;

Figure 4 is a flow chart of the method of the present invention.

**Detailed Description of the Invention**

Embodiments of the invention will be hereinafter further described in detail with reference to the drawings.

The technical problem which the present invention aims to solve is: at present, the method for monitoring receive radio frequency channel includes either need specialized test signal, which is complicated to implement and interfere in the normal work of the system, or RSSI monitoring, which has bad monitoring accuracy, long monitoring duration and narrow applicability. Thereby, a more reliable method for monitoring receive radio frequency channel is required.

The technical scheme which the present invention adopts to solve the above technical problem is: adopting the statistic of the demodulation signal quality or multi-path search energy of each user of each antenna to monitor the quality of each receive radio frequency channel in the system.

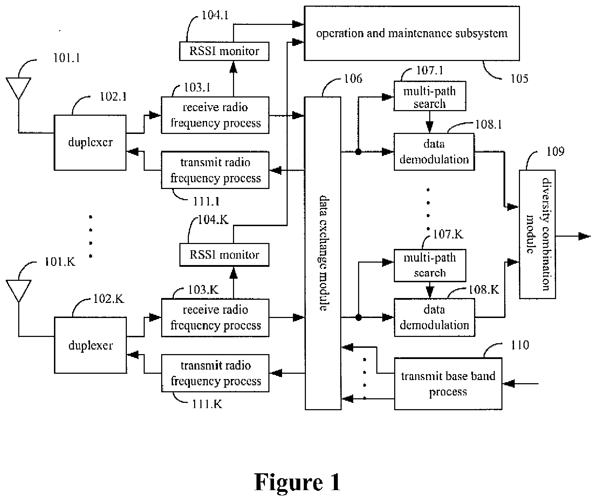

Figure 1 gives the illustration of the common wireless communication system structure. Wireless communication system is required to have one or more antenna 101.1~101.K. K is the number of antenna and K is no less than 1. Since antenna need to undertake the double function of transmitting and receiving wireless signals, thus duplexer 102.1~102.K. is generally required. As to the wireless signal received, it needs to be transformed into base band digital signal by the process of signal enlargement, spectrum removal, band pass filtration, automatic gain control, discrete time sampling, and analog-to-digital conversion, etc conducted by the receive radio frequency processing module 103.1~103.K. The base band signal of multi-antenna is then through data exchange module 106 to be provided to the subsequent base band process. Usually, data exchange module 106 is a module used for processing the send-and-receive of back board data on a back board and veneer of a rack. In the commercial system, generally there exist equipments such as radio frequency remote module and repeater station, etc. All these equipments stretch radio frequency process part beyond several hundreds or even more than ten kilometers by electric cable, optical fiber or microwave, while the base band process part is centralize conducted in computer room. At this time, data exchange module 106 contains more complicated equipments like electric cable, optical fiber conversion transceiver module, microwave transceiver module, etc.

In the CDMA system, multi-path search module 107.1~107.K is absolutely necessary. CDMA system needs to process accurate code synchronization, and the multi-path search, is processing signal despread integration in dozens of even thousands of possible time delay positions, wherein the despread integration energy of a few positions (several or dozens of) will evidently larger than the average despread integration energy of other positions; the positions with larger energy are the multi-path location of code synchronization. Multi-path search module 107.1~107.K selects multi-path with larger energy to the data demodulation module 108.1~108.K for demodulation.

In the non CDMA system, there may not exist multi-path search module 107.1~107.K, but there must be data demodulation module 108.1~108.K. The demodulation results of the multiple receive radio frequency channel are sent to diversity combination demodulation 109 for combination, to obtain diversity gain. In the receive radio frequency process part, RSSI monitoring can be conducted by RSSI monitoring module 104.1~104.K, and the monitoring results are reported to operation and maintenance subsystem 105. RSSI monitor is unable to monitor the malfunction of data exchange module 106. As to transmitting, the transmitting signal is divided into 1 path (when there is no transmitting diversity) signal or multiple paths (when there is transmitting diversity) signals and sent to data exchange module 106 by the transmitting base band processing module 110; the data is converted into radio frequency signal through transmitting radio frequency process module 111.1~111,K, and sent out by duplexer 102.1~102.K and antenna 101.1~101.K. It can be seen from figure 1 that transmitting channel is not completely the same as the receiving channel, and sometimes transmitting channel works normally but receiving channel dose not.

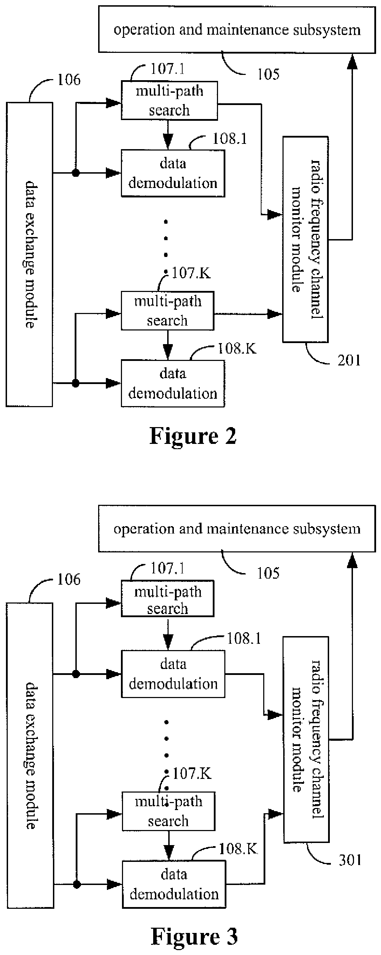

Figure 2 shows the system block diagram of conducting receive radio frequency channel monitoring by adopting multi-path search of the method of the present invention. In the CDMA system, the multi-path energy and non-multi-path energy (can be regarded as noise energy) found out by multi-path search module 107.1~107.K can be sent to radio frequency channel monitoring module 201 to conduct calculation of receive radio frequency channel quality. The calculation results of receive radio frequency channel quality are reported to the operation and maintenance subsystem 105.

Figure 3 shows the system block diagram of conducting receive radio frequency channel monitoring by adopting data demodulation of the method of the present invention. In any wireless communication system including CDMA, the demodulation results of data demodulation module 108.1~108.K can be sent to radio frequency channel monitoring module 301 to conduct calculation of receive radio frequency channel quality. The calculation results of receive radio frequency channel quality are reported to the operation and maintenance subsystem 105.

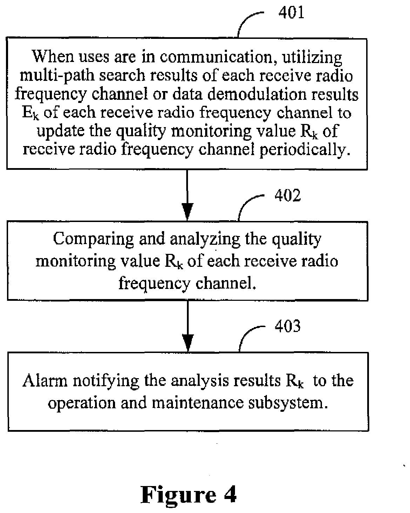

Figure 4 shows a flow chart of the present invention, which includes the following steps:
Step 401 is the first step of the present invention, i.e. when users are in communication, utilizing multi-path search results of each receive radio frequency channel or data demodulation results $E_k$ of each receive radio frequency channel to update the quality monitoring value $R_k$ of receive radio frequency channel periodically, wherein, the small letter subscript k= 1 , 2 , ...,K, capital letter K is the number of the receive radio frequency channel in the present system, for instance, when it is double antenna diversity reception, K = 2.
In the step 401, $E_k$ is the signal information exclusive of other interference and noise, and in the code division multiple access system, $E_k$ is the signal message after being descrambled and despreaded, and $E_k$ being used can be any one of the following:

The energy of the strongest path of the multi-path search results of each receive radio frequency channel;
The sum of the energy of all the paths of the multi-path search results of each receive radio frequency channel;
The ratio of the energy of the strongest path of the multi-path search results of each receive radio frequency channel to the noise energy; and
The ratio of the sum of energy of all the paths of the multi-path search results of each receive radio frequency channel to the noise energy.

The demodulation energy of the strongest path of the data demodulation results of each receive radio frequency channel;
The total demodulation energy of the data demodulation results of each receive radio frequency channel;
The ratio of the demodulation energy of the strongest path of the data demodulation results of each receive radio frequency channel to the noise energy; and
The ratio of the sum of the total demodulation energy of the data demodulation results of each receive radio frequency channel to the noise energy.
In Step 401, the updating mode of $R_k$ can be any one of the following:

(11) Adopting IIR filtering method, filtering the history monitoring quality value of receive radio frequency channel and the current receive radio frequency channel quality $E_k(n)$, to obtain the new quality monitoring value $R_k(n)$, for instance, the first order IIR filtering method can be demonstrated by the following recursive relational expression :

$$R_k(n) = A * R_k(n-1) + (1-A) * E_k(n) \qquad (1)$$

Wherein, $R_k(n\text{-}1)$ is the history quality monitoring value, A is the filtering coefficient, 0<A<1.

(12) Adopting FIR filtering method, weighting and seeking the average of each receive radio frequency channel quality $E_k$ by FIR filtering method. Wherein the simplest way is setting the coefficient of FIR to be 1, which is equivalent to calculating the arithmetic mean of certain quantity of $E_k$. It can be illustrated by the formula:

$$R_k = (E_k(1) + E_k(2) + ... + E_k(N)) / N \qquad (2)$$

Wherein, N is the number of calculating average, which can be dozens or hundreds or even more than a thousand.

In Step 401, the periodic can be dozens of milliseconds, several seconds or even dozes of seconds. For instance, in the CDMA system of double antenna diversity reception, the current two receive radio frequency channel estimated value have been R1(0) = 500, R2(0) = 400. At this time, a new user is established and multi-path search of all the data of receive radio frequency channel can be finished once in 40 milliseconds. Supposing the first search result of the user is:

Multi-path energy (3 multi-paths) on the receive radio frequency channel 1: 560,340, 200;
Multi-path energy (2 multi-paths) on the receive radio frequency channel 2 (2 multi-paths): 180,150;

The present invention adopts the strongest path energy of the multi-path search as $E_k$ to calculate the receive radio frequency channel quality and adopts IIR filtering method with the filtering coefficient A = 0.95, then

$$E_1 = 560 \, , \, E_2 = 180 \, ;$$

$$R_1(1) = 0.95 * R_1(0) + 0.05 * E_1 = 503 \, ;$$

$$R_2(1) = 0.95 * R_2(0) + 0.05 * E_2 = 389 \, ;$$

Step 402 is the second step of the present invention, i.e. comparing and analyzing the quality monitoring value $R_k$ of each receive radio frequency channel obtained in the first step 401.

In Step 402, the method of comparing the quality monitoring value $R_k$ can be any one of the following:

(21) Calculating the average value R of all the receive radio frequency channel monitoring values:

$$R = (R_1 + R_2 + \ldots + R_K)/K \qquad (3)$$

and then calculating the ratio $Rm_k = R_k/R$, if $Rm_k$ is less than a threshold T1, then the kth receive radio frequency channel is regarded as problematic.

$$0 < T1 < 1.$$

(22) Calculating the ratio $Ro_k$ of each receive radio frequency channel monitoring value to the mean value of other receive radio frequency channel monitoring value:

$$Ro_k = R_k/[(R_1 + R_2 + \ldots + R_K - R_k)/(N-1)] \qquad (4)$$

If $Ro_k$ is less than a threshold T2, then the kth receive radio frequency channel is regarded as problematic.

(23) Comparing $R_k$ to the threshold T3 set when the system is designed directly. If $R_k$ is less than threshold T3, then the kth receive radio frequency channel is regarded as problematic.

For example, following the above example, calculating the ratio $Ro_k$ of each receive radio frequency channel monitoring value to the mean value of other receive radio frequency channel monitoring value, which is illustrated:

$$Ro_1 = R_1(1)/\{[R_1(1)+R_2(1)-R_1(1)]/(2-1)\} = R_1(1)/R_2(1) = 503/389 = 1.29$$

$$Ro_2 = R_2(1)/R_1(1) = 0.77;$$

The above two ratios evaluated the balance degree of the two receive radio frequency channels. If threshold T2 the threshold corresponded to is 0.78, then at this time, the second receive radio frequency channel is regarded as problematic.

Certainly, it can also design a threshold T3 = 390 corresponding to $R_k$, at this time, the second receive radio frequency is regarded as problematic.

Step 403 is the third step of the present invention, i.e. alarm notifying the analysis results $R_k$ of the second step to the operation and maintenance subsystem as needed.

In Step 403, alarm notification can be any one of the following situations:

(31) When some receive radio frequency channel is regarded as problematic, perform the alarm notification;
(32) When some receive radio frequency which was originally regarded as problematic comes to work normally currently, perform alarm cancel notification;
(33) Whatever quality monitoring result it would be, notify the up-to-date quality monitoring results periodically.

The main characteristic of the present invention lies in that: utilizing multi-path search or data demodulation structure to conduct receive radio frequency channel monitoring. As the demodulation signal or multi-path search has excluded a great deal of interference noise, more purified and useful signals are obtained, and such monitor has high accuracy and short statistic time. Even if only one user is in communication, the difference of receive radio frequency channels can be well measured, and the preset invention can be widely used. As the quality monitoring is conducted from base band multi-path search or demodulation energy, the present invention can monitor the quality situation of the whole channel from antennae to base band process.

The use of the monitoring method of the present invention is not limited to the base station, but also can be used in mobile station.

It should be understood by those skilled in the art that various modifications, combinations, sub-combinations and alterations may occur depending on design requirements and other factors insofar as they are within the scope of the appended claims or the equivalents thereof.

Industrial Applicability

It can be seen from the above analysis that, according to the method of the present invention, data demodulation results or multi-path search results can be easily used to conduct receive radio frequency channel quality monitoring. As the demodulation signal or multi-path search has excluded a great deal of interference noise, more purified and useful signals are obtained, and such monitor has high accuracy and short statistic time. For example, in the normally operating process of WCDMA system, when measuring RSSI, if only one voice user is in communication, then the ratio of signal energy to noise energy of this user is 1:150, i.e. the signal energy of several users at the beginning is almost submerged in the noise; the change of RSSI is rather small, so it is hard to monitor the abnormal change of receive radio frequency channel. However, after multi-path search, supposing the multi-path search using 6 pilots to perform coherent integration, after which the $6 \times 256$ times spread spectrum gain can be obtained, and the ratio of signal energy to interference energy is 10:1, thus the change of receive radio frequency channel can be monitored accurately. If using the demodulation energy of pilots, $6 \times 256$ times spread spectrum gain can be obtained. Therefore, by adopting the method of the present invention, even if only one user is in communication, the difference of receive radio frequency channels can be well measured, and the present invention can be widely used. Moreover, as the quality monitoring is conducted from base band multi-path search or demodulation energy, the present invention can monitor the quality situation of the whole channel from antennae to base band process including data exchange module.

**Claims**

1. A method for monitoring a receive radio frequency channel in wireless communication system, which is applicable to wireless communication system comprising a data exchange module (106), a multi-path search module (107.1-107.K) connected to the data exchange module (106), a data demodulation module (108.1-108.K) connected to the data exchange module (106) and the multi-path search module (107.1-107.K), and an operation and maintenance subsystem (105), **characterized by** comprising the following steps:

Step one (401), when users are in communication, according to multi-path search results of each receive radio frequency channel processed by the multi-path search module or data demodulation results of each receive radio frequency channel processed by the data demodulation module, updating a monitored value of quality of the each receive radio frequency channel periodically, wherein the receive radio frequency channel refers to an assembly of all the devices and parts passed through by the signals received by an antenna during the process of changing from radio frequency signal to base band digital signal;
Step two (402), performing a comparing and analyzing operation for the monitored value of quality of the each receive radio frequency channel and obtaining analysis results; and
Step three (403), sending an alarm notification about the analysis results to the operation and maintenance subsystem;
wherein the step of sending the alarm notification to the operation and maintenance subsystem further comprises:

when some receive radio frequency channel is regarded as problematic, performing alarm notification;
when some receive radio frequency which was originally regarded as problematic comes to work normally currently, performing alarm cancel notification; or
whatever quality monitoring result it would be, notifying an up-to-date monitored results of quality periodically.

2. The method for monitoring receive radio frequency channel in wireless communication system as claimed in claim 1, **characterized in that**:
in the Step one (401), the multi-path search results or the data demodulation results are signal information exclusive of other interference and noises.

3. The method for monitoring receive radio frequency channel in wireless communication system as claimed in claim 1, **characterized in that**:
in Code Division Multiple Access wireless communication system, the multi-path search results or the data demodulation results are signal information after being descrambled and despreaded.

4. The method for monitoring receive radio frequency channel in wireless communication system as claimed in claim 1, 2 or 3, **characterized in that**, in the Step one (401), the multi-path search results is any one of the following numerical values:

the energy of the strongest path of the multi-path search results of each receive radio frequency channel;
the sum of the energy of all the paths of the multi-path search results of each receive radio frequency channel;
the ratio of the energy of the strongest path of the multi-path search results of each receive radio frequency channel to the noise energy; and
the ratio of the sum of energy of all the paths of the multi-path search results of each receive radio frequency channel to the noise energy.

5. The method for monitoring receive radio frequency channel in wireless communication system as claimed in claim 1, 2 or 3, **characterized in that**, in the Step one, the data demodulation results is any one of the following numerical values:

the demodulation energy of the strongest path of the data demodulation results of each receive radio frequency channel;
the total demodulation energy of the data demodulation results of each receive radio frequency channel;
the ratio of the demodulation energy of the strongest path of the data demodulation results of each receive radio frequency channel to the noise energy; and
the ratio of the sum of the total demodulation energy of the data demodulation results of each receive radio frequency channel to the noise energy.

6. The method for monitoring receive radio frequency channel in wireless communication system as claimed in claim 1, 2 or 3, **characterized in that**, in the Step one (401), in updating the monitored value of quality of each receive radio frequency channel periodically, the update period adopted is dozens of milliseconds, several seconds or dozens of seconds.

7. The method for monitoring receive radio frequency channel in wireless communication system as claimed in claim 1, 2 or 3, **characterized in that**, in the Step one (401),

the update of the monitored value of quality of each receive radio frequency channel is implemented in IIR filtering mode, specified as follows: performing IIR filtering on history monitored value of quality of each receive radio frequency channel and the current multi-path search results or the data demodulation results of the receive radio frequency channel, to obtain updated monitored value of quality; or,
the update of the monitored value of quality of each receive radio frequency channel is implemented in FIR filtering mode, specified as follows: weighting and averaging the multi-path search results or data demodulation results of each receive radio frequency channel by FIR filtering method, and then obtain the updated monitored value of quality.

8. The method for monitoring receive radio frequency channel in wireless communication system as claimed in claim 1, 2 or 3, **characterized in that**, in the Step two (402), performing the comparing and analyzing operation for the monitored value of quality of each receive radio frequency channel is implemented by the following mode:
calculating the ratio of the monitored value of quality of each receive radio frequency channel to the mean value of the monitored values of quality of all receive radio frequency channels, if the ratio is less than a set threshold, the receive radio frequency channel the ratio corresponded to is regarded as problematic.

9. The method for monitoring receive radio frequency channel in wireless communication system as claimed in claim 1, 2 or 3, **characterized in that**, in the Step two (402), performing the comparing and analyzing operation for the monitored value of quality of each receive radio frequency channel is implemented by the following mode: calculating the ratio of the monitored value of quality of each receive radio frequency channel to the mean value of the monitored values of quality of other receive radio frequency channels, if the ratio is less than a set threshold, the receive radio frequency channel the ratio corresponded to is regarded as problematic.

10. The method for monitoring receive radio frequency channel in wireless communication system as claimed in claim 1, 2 or 3, **characterized in that**, in the Step two (402), performing comparing and analyzing operation for the monitored value of quality of each receive radio frequency channel is implemented by the following mode: comparing the monitored value of quality of each receive radio frequency channel to a threshold set as the system designed directly, if the monitored value of quality of the receive radio frequency channel is less than the threshold value, the receive radio frequency channel is regarded as problematic.

11. A device for monitoring a receive radio frequency channel in wireless communication system, comprising a data exchange module (106), a multi-path search module (107.1-107.K) connected to the data exchange module, a data demodulation module (108.1-108.K) connected to the data exchange module and the multi-path search module, and an operation and maintenance subsystem (105), **characterized by** further comprising:

a radio frequency channel monitor module (201,301), connected to the multi-path search module and the data demodulation module, configured to analyze the quality of each receive radio frequency channel, and send an alarm notification about the analysis results to the operation and maintenance subsystem, according to periodically updated monitored value of quality of each receive radio frequency channel obtained from the multi-path search results of each receive radio frequency channel processed by the multi-path search module or the data demodulation results of each receive radio frequency channel processed by the data demodulation module; wherein the receive radio frequency channel refers to an assembly of all the devices and parts passed through by the signals received by an antenna during the process of changing from radio frequency signal to base band digital signal; and wherein the radio frequency channel monitor module is further configured to performing the following operations:

when some receive radio frequency channel is regarded as problematic, performing alarm notification; when some receive radio frequency which was originally regarded as problematic comes to work normally currently, performing alarm cancel notification; or whatever quality monitoring result it would be, notifying an up-to-date monitored results of quality periodically.

**Patentansprüche**

1. Verfahren zum Überwachen eines Empfangs-Funkfrequenzkanals in einem drahtlosen Kommunikationssystem, das auf ein drahtloses Kommunikationssystem anwendbar ist, das ein Datenaustauschmodul (106), ein mit dem Datenaustauschmodul (106) verbundenes Mehrpfad-Suchmodul (107.1-107.K), ein mit dem Datenaustauschmodul (106) und dem Mehrpfad-Suchmodul (107.1-107.K) verbundenes Datendemodulationsmodul (108.1-108.K), und ein Betriebs- und Wartungs-Subsystem (105) umfasst, **dadurch gekennzeichnet, dass** es die folgenden Schritte umfasst:

Schritt eins (401), wenn Benutzer in Kommunikation stehen, periodisches Aktualisieren, gemäß Mehrpfad-Suchergebnissen von jedem von dem Mehrpfad-Suchmodul verarbeiteten Empfangs-Funkfrequenzkanal oder Datendemodulationsergebnissen von jedem von dem Datendemodulationsmodul verarbeiteten Empfangs-Funkfrequenzkanal, eines überwachten Qualitätswerts von dem jedem Empfangs-Funkfrequenzkanal, wobei sich der Empfangs-Funkfrequenzkanal auf eine Anordnung aller der Vorrichtungen und Teile bezieht, welche von den von einer Antenne empfangenen Signalen während des Veränderungsprozesses von Funkfrequenzsignal auf digitales Basisbandsignal durchlaufen werden; Schritt zwei (402), Durchführen eines Vergleichs- und Analysiervorgangs für den überwachten Qualitätswert von dem jedem Empfangs-Funkfrequenzkanal, und Erhalten von Analyseergebnissen; und Schritt drei (403), Senden einer Alarmmeldung bezüglich der Analyseergebnisse an das Betriebs- und Wartungs-Subsystem; wobei der Schritt des Sendens der Alarmmeldung an das Betriebs- und Wartungs-Subsystem weiter umfasst:

wenn ein gewisser Empfangs-Funkfrequenzkanal als problembehaftet erachtet wird, Durchführen einer Alarmmeldung;

wenn eine gewisse Empfangs-Funkfrequenz, die ursprünglich als problembehaftet erachtet wurde, aktuell normal zu funktionieren kommt, Durchführen einer Alarm-Abbruchmeldung; oder

gleich um welches Qualitätsüberwachungsergebnis es sich handelt, periodisches Melden eines aktuellen überwachten Qualitätsergebnisses.

2. Verfahren zum Überwachen eines Empfangs-Funkfrequenzkanals in einem drahtlosen Kommunikationssystem nach Anspruch 1, **dadurch gekennzeichnet, dass**:
im Schritt eins (401) die Mehrpfad-Suchergebnisse oder die Datendemodulationsergebnisse Signalinformationen ausschließlich anderer Interferenzen und Rauschen sind.

3. Verfahren zum Überwachen eines Empfangs-Funkfrequenzkanals in einem drahtlosen Kommunikationssystem nach Anspruch 1, **dadurch gekennzeichnet, dass**:
in einem drahtlosen Codemultiplex-Vielfachzugriffs-Kommunikationssystem die Mehrpfad-Suchergebnisse oder die Datendemodulationsergebnisse Signalinformationen nach Entwürfeln und Entspreizen sind.

4. Verfahren zum Überwachen eines Empfangs-Funkfrequenzkanals in einem drahtlosen Kommunikationssystem nach Anspruch 1, 2 oder 3, **dadurch gekennzeichnet, dass** im Schritt eins (401) die Mehrpfad-Suchergebnisse einer aus den folgenden numerischen Werten sind:

die Energie des stärksten Pfades der Mehrpfad-Suchergebnisse von jedem Empfangs-Funkfrequenzkanal;
die Summe der Energie aller der Pfade der Mehrpfad-Suchergebnisse von jedem Empfangs-Funkfrequenzkanal;
das Verhältnis der Energie des stärksten Pfades der Mehrpfad-Suchergebnisse von jedem Empfangs-Funkfrequenzkanal zur Rauschenergie; und
das Verhältnis der Energiesumme aller der Pfade der Mehrpfad-Suchergebnisse von jedem Empfangs-Funkfrequenzkanal zur Rauschenergie.

5. Verfahren zum Überwachen eines Empfangs-Funkfrequenzkanals in einem drahtlosen Kommunikationssystem nach Anspruch 1, 2 oder 3, **dadurch gekennzeichnet, dass** im Schritt eins die Datendemodulationsergebnisse einer aus den folgenden numerischen Werten sind:

die Demodulationsenergie des stärksten Pfades der Datendemodulationsergebnisse von jedem Empfangs-Funkfrequenzkanal;
die Gesamt-Demodulationsenergie der Datendemodulationsergebnisse von jedem Empfangs-Funkfrequenzkanal;
das Verhältnis der Demodulationsenergie des stärksten Pfades der Datendemodulationsergebnisse von jedem Empfangs-Funkfrequenzkanal zur Rauschenergie; und
das Verhältnis der Summe der Gesamt-Demodulationsenergie der Datendemodulationsergebnisse von jedem Empfangs-Funkfrequenzkanal zur Rauschenergie.

6. Verfahren zum Überwachen eines Empfangs-Funkfrequenzkanals in einem drahtlosen Kommunikationssystem nach Anspruch 1, 2 oder 3, **dadurch gekennzeichnet, dass** im Schritt eins (401) beim periodischen Aktualisieren des überwachten Qualitätswerts von jedem Empfangs-Funkfrequenzkanal die übernommene Aktualisierungsperiode Dutzende Millisekunden, mehrere Sekunden oder Dutzende Sekunden beträgt.

7. Verfahren zum Überwachen eines Empfangs-Funkfrequenzkanals in einem drahtlosen Kommunikationssystem nach Anspruch 1, 2 oder 3, **dadurch gekennzeichnet, dass** im Schritt eins (401)
das Aktualisieren des überwachten Qualitätswerts von jedem Empfangs-Funkfrequenzkanal in IIR-Filterungsmodus implementiert ist, der wie folgt spezifiziert ist: Durchführen von IIR-Filterung an einem historischen überwachten Qualitätswert von jedem Empfangs-Funkfrequenzkanal und den aktuellen Mehrpfad-Suchergebnissen oder den Datendemodulationsergebnissen des Empfangs-Funkfrequenzkanals, um einen aktualisierten überwachten Qualitätswert zu erhalten; oder
das Aktualisieren des überwachten Qualitätswerts von jedem Empfangs-Funkfrequenzkanal in FIR-Filterungsmodus implementiert ist, der wie folgt spezifiziert ist: Gewichten und Mitteln der Mehrpfad-Suchergebnisse oder Datendemodulationsergebnisse von jedem Empfangs-Funkfrequenzkanal über FIR-Filterungsverfahren, und danach Erhalten des aktualisierten überwachten Qualitätswerts.

8. Verfahren zum Überwachen eines Empfangs-Funkfrequenzkanals in einem drahtlosen Kommunikationssystem nach Anspruch 1, 2 oder 3, **dadurch gekennzeichnet, dass** im Schritt zwei (402) das Durchführen des Vergleichs- und Analysiervorgangs für den überwachten Qualitätswert von jedem Empfangs-Funkfrequenzkanal über den folgenden Modus implementiert ist:
Berechnen des Verhältnisses des überwachten Qualitätswerts von jedem Empfangs-Funkfrequenzkanal zum Mittelwert der überwachten Qualitätswerte von allen Empfangs-Funkfrequenzkanälen, wenn das Verhältnis niedriger als ein eingestellter Schwellenwert ist, wird der Empfangs-Funkfrequenzkanal, dem das Verhältnis entspricht, als problembehaftet erachtet.

9.  Verfahren zum Überwachen eines Empfangs-Funkfrequenzkanals in einem drahtlosen Kommunikationssystem nach Anspruch 1, 2 oder 3, **dadurch gekennzeichnet, dass** im Schritt zwei (402) das Durchführen des Vergleichs- und Analysiervorgangs für den überwachten Qualitätswert von jedem Empfangs-Funkfrequenzkanal über den folgenden Modus implementiert ist:
Berechnen des Verhältnisses des überwachten Qualitätswerts von jedem Empfangs-Funkfrequenzkanal zum Mittelwert der überwachten Qualitätswerte von anderen Empfangs-Funkfrequenzkanälen, wenn das Verhältnis niedriger als ein eingestellter Schwellenwert ist, wird der Empfangs-Funkfrequenzkanal, dem das Verhältnis entspricht, als problembehaftet erachtet.

10. Verfahren zum Überwachen eines Empfangs-Funkfrequenzkanals in einem drahtlosen Kommunikationssystem nach Anspruch 1, 2 oder 3, **dadurch gekennzeichnet, dass** im Schritt zwei (402) das Durchführen des Vergleichs- und Analysiervorgangs für den überwachten Qualitätswert von jedem Empfangs-Funkfrequenzkanal über den folgenden Modus implementiert ist:
Vergleichen des überwachten Qualitätswerts von jedem Empfangs-Funkfrequenzkanal mit einem Schwellenwert, der eingestellt wurde, als das System direkt ausgelegt wurde, wenn der überwachte Qualitätswert des Empfangs-Funkfrequenzkanals niedriger ist als der Schwellenwert, wird der Empfangs-Funkfrequenzkanal als problembehaftet erachtet.

11. Vorrichtung zum Überwachen eines Empfangs-Funkfrequenzkanals in einem drahtlosen Kommunikationssystem, welche ein Datenaustauschmodul (106), ein mit dem Datenaustauschmodul verbundenes Mehrpfad-Suchmodul (107.1-107.K), ein mit dem Datenaustauschmodul und dem Mehrpfad-Suchmodul verbundenes Datendemodulationsmodul (108.1-108.K), und ein Betriebs- und Wartungs-Subsystem (105) umfasst, **dadurch gekennzeichnet, dass** sie weiter umfasst:

ein mit dem Mehrpfad-Suchmodul und dem Datendemodulationsmodul verbundenes Funkfrequenzkanal-Überwachungsmodul (201, 301), das dazu konfiguriert ist, die Qualität von jedem Empfangs-Funkfrequenzkanal zu überwachen und eine Alarmmeldung bezüglich der Analyseergebnisse an das Betriebs- und Wartungs-Subsystem zu senden gemäß einem periodisch aktualisierten überwachten Qualitätswert von jedem Empfangs-Funkfrequenzkanal, welcher aus den Mehrpfad-Suchergebnissen von jedem von dem Mehrpfad-Suchmodul verarbeiteten Empfangs-Funkfrequenzkanal oder den Datendemodulationsergebnissen von jedem von dem Datendemodulationsmodul verarbeiteten Empfangs-Funkfrequenzkanal erhalten wurde;
wobei sich der Empfangs-Funkfrequenzkanal auf eine Anordnung aller der Vorrichtungen und Teile bezieht, welche von den von einer Antenne empfangenen Signalen während des Veränderungsprozesses von Funkfrequenzsignal auf digitales Basisbandsignal durchlaufen werden; und
wobei das Funkfrequenzkanal-Überwachungsmodul weiter dazu konfiguriert ist, die folgenden Vorgänge durchzuführen:

wenn ein gewisser Empfangs-Funkfrequenzkanal als problembehaftet erachtet wird, Durchführen einer Alarmmeldung;
wenn eine gewisse Empfangs-Funkfrequenz, die ursprünglich als problembehaftet erachtet wurde, aktuell normal zu funktionieren kommt, Durchführen einer Alarm-Abbruchmeldung; oder
gleich um welches Qualitätsüberwachungsergebnis es sich handelt, periodisches Melden eines aktuellen überwachten Qualitätsergebnisses.

## Revendications

1.  Procédé de surveillance d'un canal de radiofréquence de réception dans un système de communication sans fil, qui est applicable à un système de communication sans fil comprenant un module d'échange de données (106), un module de recherche de trajets multiples (107.1-107.K) connecté au module d'échange de données (106), un module de démodulation de données (108.1-108.K) connecté au module d'échange de données (106) et au module de recherche de trajets multiples (107.1-107.K), et un sous-système de fonctionnement et maintenance (105), **caractérisé en ce qu'**il comprend les étapes suivantes :

étape un (401), quand des utilisateurs sont en communication, en fonction de résultats de recherche de trajets multiples de chaque canal de radiofréquence de réception traité par le module de recherche de trajets multiples ou de résultats de démodulation de données de chaque canal de radiofréquence de réception traité par le module de démodulation de données, la mise à jour périodique d'une valeur de qualité surveillée du chaque canal de radiofréquence de réception, dans lequel le canal de radiofréquence de réception se réfère à un ensemble de tous les dispositifs et parties traversés par les signaux reçus par une antenne durant le processus de changement d'un signal de radiofréquence à un signal numérique de bande de base ;

étape deux (402), l'exécution d'une opération de comparaison et d'analyse pour la valeur de qualité surveillée du chaque canal de radiofréquence de réception et l'obtention de résultats d'analyse ; et

étape trois (403), l'envoi d'une notification d'alarme concernant les résultats d'analyse au sous-système de fonctionnement et maintenance ;

dans lequel l'étape d'envoi de la notification d'alarme au sous-système de fonctionnement et maintenance comprend en outre :

quand un certain canal de radiofréquence de réception est considéré comme problématique, l'exécution d'une notification d'alarme ;

quand une certaine radiofréquence de réception qui a été initialement considérée comme problématique vient actuellement à fonctionner normalement, l'exécution d'une notification d'annulation d'alarme ; ou

quel que serait un résultat de surveillance de qualité, la notification périodique d'un résultat de qualité surveillé mis à jour.

2. Procédé de surveillance d'un canal de radiofréquence de réception dans un système de communication sans fil selon la revendication 1, **caractérisé en ce que** :

dans l'étape un (401), les résultats de recherche de trajets multiples ou les résultats de démodulation de données sont des informations de signal excluant d'autres interférences et bruits.

3. Procédé de surveillance d'un canal de radiofréquence de réception dans un système de communication sans fil selon la revendication 1, **caractérisé en ce que** :

dans un système de communication sans fil d'accès multiple par répartition en code, les résultats de recherche de trajets multiples ou les résultats de démodulation de données sont des informations de signal après avoir été désembrouillées et désétalées.

4. Procédé de surveillance d'un canal de radiofréquence de réception dans un système de communication sans fil selon la revendication 1, 2 ou 3, **caractérisé en ce que**, dans l'étape un (401), les résultats de recherche de trajets multiples sont l'un quelconque des valeurs numériques suivantes :

l'énergie du trajet le plus fort des résultats de recherche de trajets multiples de chaque canal de radiofréquence de réception ;

la somme de l'énergie de tous les trajets des résultats de recherche de trajets multiples de chaque canal de radiofréquence de réception ;

le rapport entre l'énergie du trajet le plus fort des résultats de recherche de trajets multiples de chaque canal de radiofréquence de réception et l'énergie de bruit ; et

le rapport entre la somme de l'énergie de tous les trajets des résultats de recherche de trajets multiples de chaque canal de radiofréquence de réception et l'énergie de bruit.

5. Procédé de surveillance d'un canal de radiofréquence de réception dans un système de communication sans fil selon la revendication 1, 2 ou 3, **caractérisé en ce que**, dans l'étape un, les résultats de démodulation de données sont l'un quelconque des valeurs numériques suivantes :

l'énergie de démodulation du trajet le plus fort des résultats de démodulation de données de chaque canal de radiofréquence de réception ;

l'énergie de démodulation totale des résultats de démodulation de données de chaque canal de radiofréquence de réception ;

le rapport entre l'énergie de démodulation du trajet le plus fort des résultats de démodulation de données de chaque canal de radiofréquence de réception et l'énergie de bruit ; et
le rapport entre la somme de l'énergie de démodulation totale des résultats de démodulation de données de chaque canal de radiofréquence de réception et l'énergie de bruit.

6. Procédé de surveillance d'un canal de radiofréquence de réception dans un système de communication sans fil selon la revendication 1, 2 ou 3, **caractérisé en ce que**, dans l'étape un (401), dans la mise à jour périodique de la valeur de qualité surveillée de chaque canal de radiofréquence de réception, la période de mise à jour adoptée est des douzaines de millisecondes, plusieurs secondes ou des douzaines de secondes.

7. Procédé de surveillance d'un canal de radiofréquence de réception dans un système de communication sans fil selon la revendication 1, 2 ou 3, **caractérisé en ce que** dans l'étape un (401),
la mise à jour de la valeur de qualité surveillée de chaque canal de radiofréquence de réception est mise en oeuvre dans un mode de filtrage IIR, spécifié comme suit : l'exécution d'un filtrage IIR sur une valeur de qualité surveillée historique de chaque canal de radiofréquence de réception et les résultats de recherche de trajets multiples ou les résultats de démodulation de données du canal de radiofréquence de réception, pour obtenir une valeur de qualité surveillée mise à jour ; ou
la mise à jour de la valeur de qualité surveillée de chaque canal de radiofréquence de réception est mise en oeuvre dans un mode de filtrage FIR, spécifié comme suit : la pondération et le calcul de la moyenne des résultats de recherche de trajets multiples ou les résultats de démodulation de données de chaque canal de radiofréquence de réception par un procédé de filtrage FIR, et obtenir ainsi la valeur de qualité surveillée mise à jour.

8. Procédé de surveillance d'un canal de radiofréquence de réception dans un système de communication sans fil selon la revendication 1, 2 ou 3, **caractérisé en ce que**, dans l'étape deux (402), l'exécution de l'opération de comparaison et d'analyse pour la valeur de qualité surveillée de chaque canal de radiofréquence de réception est mise en oeuvre de la manière suivante :
le calcul du rapport entre la valeur de qualité surveillée de chaque canal de radiofréquence de réception et la valeur moyenne des valeurs de qualité surveillées de tous les canaux de radiofréquence de réception, si le rapport est inférieur à un seuil défini, le canal de radiofréquence de réception auquel le rapport correspond est considéré comme problématique.

9. Procédé de surveillance d'un canal de radiofréquence de réception dans un système de communication sans fil selon la revendication 1, 2 ou 3, **caractérisé en ce que**, dans l'étape deux (402), l'exécution de l'opération de comparaison et d'analyse pour la valeur de qualité surveillée de chaque canal de radiofréquence de réception est mise en oeuvre de la manière suivante :
le calcul du rapport entre la valeur de qualité surveillée de chaque canal de radiofréquence de réception et la valeur moyenne des valeurs de qualité surveillées d'autres canaux de radiofréquence de réception, si le rapport est inférieur à un seuil défini, le canal de radiofréquence de réception auquel le rapport correspond est considéré comme problématique.

10. Procédé de surveillance d'un canal de radiofréquence de réception dans un système de communication sans fil selon la revendication 1, 2 ou 3, **caractérisé en ce que**, dans l'étape deux (402), l'exécution d'une opération de comparaison et d'analyse pour la valeur de qualité surveillée de chaque canal de radiofréquence de réception est mise en oeuvre de la manière suivante :
la comparaison de la valeur de qualité surveillée de chaque canal de radiofréquence de réception à un seuil défini comme le système l'a directement désigné, si la valeur de qualité surveillée du canal de radiofréquence de réception est inférieure à la valeur de seuil, le canal de radiofréquence de réception est considéré comme problématique.

11. Dispositif de surveillance d'un canal de radiofréquence de réception dans un système de communication sans fil comprenant un module d'échange de données (106), un module de recherche de trajets multiples (107.1-107.K) connecté au module d'échange de données, un module de démodulation de données (108.1-108.K) connecté au module d'échange de données et au module de recherche de trajets multiples, et un sous-système de fonctionnement et maintenance (105), **caractérisé en ce qu'**il comprend en outre :

un module de surveillance de canal de radiofréquence (201, 301), connecté au module de recherche de trajets multiples et au module de démodulation de données, configuré pour analyser la qualité de chaque canal de radiofréquence de réception, et envoyer une notification d'alarme concernant les résultats d'analyse au sous-système de fonctionnement et maintenance, en fonction d'une valeur de qualité surveillée mise à jour périodiquement de chaque canal de radiofréquence de réception obtenue à partir des résultats de recherche de trajets multiples de chaque canal de radiofréquence de réception traité par le module de recherche de trajets multiples ou des résultats de démodulation de données de chaque canal de radiofréquence de réception traité par le module de démodulation de données ;

dans lequel le canal de radiofréquence de réception se réfère à un ensemble de tous les dispositifs et parties traversés par les signaux reçus par une antenne durant le processus de changement d'un signal de radiofréquence à un signal numérique de bande de base ; et

dans lequel le module de surveillance de canal de radiofréquence est configuré en outre pour effectuer les opérations suivantes :

 quand un certain canal de radiofréquence de réception est considéré comme problématique, l'exécution d'une notification d'alarme ;

 quand une certaine radiofréquence de réception qui a été initialement considérée comme problématique vient actuellement à fonctionner normalement, l'exécution d'une notification d'annulation d'alarme ; ou

 quel que serait un résultat de surveillance de qualité, la notification périodique d'un résultat de qualité surveillé mis à jour.

**Figure 1**

Figure 2

Figure 3

401

When uses are in communication, utilizing
multi-path search results of each receive radio
frequency channel or data demodulation results
$E_k$ of each receive radio frequency channel to
update the quality monitoring value $R_k$ of
receive radio frequency channel periodically.

402

Comparing and analyzing the quality
monitoring value $R_k$ of each receive radio
frequency channel.

403

Alarm notifying the analysis results $R_k$ to the
operation and maintenance subsystem.

# Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1492249 A
- EP 1496628 A
- US 20040127261 A
- JP 04354434 A
- US 6266528 B
- CN 200310112958